# EUROPÄISCHE PATENTSCHRIFT

(11) **EP 4 056 825 B1**
(45) Veröffentlichungstag und Bekanntmachung des Hinweises auf die Patenterteilung: **13.11.2024**
(21) Anmeldenummer: 21161673.5
(22) Anmeldetag: 10.03.2021
(51) Int. Cl.: F02C 6/08, B64F 5/60

(54) **VERFAHREN UND COMPUTERPROGRAMMPRODUKT ZUR ÜBERWACHUNG EINES ZAPFLUFTVERSORGUNGSSYSTEMS EINES FLUGZEUGS**
METHOD AND COMPUTER PROGRAM PRODUCT FOR MONITORING AN AIRCRAFT BLEED AIR SYSTEM
PROCÉDÉ ET PRODUIT PROGRAMME INFORMATIQUE DESTINÉS À LA SURVEILLANCE D'UN SYSTÈME DE PRÉLÈVEMENT D'AIR D'UN AVION

(43) Veröffentlichungstag der Anmeldung: 14.09.2022
(73) Patentinhaber: Lufthansa Technik AG, 22335 Hamburg (DE)
(72) Erfinder: Demeschkin, Alexej, 55118 Mainz (DE); Steude, Henrik Sebastian, 20259 Hamburg (DE)
(74) Vertreter: Glawe, Delfs, Moll

(56) Entgegenhaltungen:
- EP-B1- 3 299 294
- US-A1- 2014 309 846
- US-B2- 9 555 903

## Beschreibung

Die Erfindung betrifft ein Verfahren und ein Computerprogrammprodukt zur Überwachung eines Zapfluftversorgungssystems eines Flugzeugs.

Bei Flugzeugen, insbesondere Verkehrsflugzeugen, wird aus dem Turboverdichter eines Triebwerks verdichtete Luft abgezapft, um einen gewünschten Druck in einer Druckkabine oder in pneumatischen Systemen des Flugzeuges erzeugen bzw. aufrecht erhalten zu können. Bei den Triebwerken kann es sich um Strahltriebwerke, Propellerturbinen oder Hilfsgasturbinen (APUs) handeln. Es ist üblich, dass jedes Triebwerk eines Flugzeuges mit einem separaten Zapfluftversorgungssystem auszustatten, u. a. auch um eine Redundanz zu gewährleisten.

Einem Triebwerk wird die Zapfluft durch ein Zapfluftversorgungssystem entnommen und den verschiedenen Verbrauchern zugeleitet. Das Zapfluftversorgungssystem verfügt grundsätzlich über verschiedene Stellglieder, insbesondere steuerbare oder selbstregulierende Ventile, Druck- und Temperatursensoren oder Aufnehmer sowie ggf. einer Steuerungseinheit, die in Abhängigkeit der ermittelten Druck- und Temperaturwerte, sowie ggf. externer Steuerungssignale, die Stellglieder betätigen kann. Es ist auch möglich, auf eine Steuerungseinheit zu verzichten, wobei dann eine rein pneumatische Regelung der einzelnen Stellglieder realisiert werden kann. In beiden Fällen kann neben der Einhaltung eines gewünschten Betriebsdrucks grundsätzlich auch die Temperatur der den verschiedenen Verbrauchern zur Verfügung gestellten Druckluft geregelt werden.

Zapfluftversorgungssysteme weisen aufgrund der vielen mechanischen Komponenten, insbesondere bei rein pneumatischer Regelung, eine geringe Zuverlässigkeit auf. Bei Auftreten einer Störung ist das Zapfluftversorgungssystem aus Sicherheitsgründen grundsätzlich abzuschalten, auch wenn die häufigen Ausfälle teils erhebliche Störungen im Betrieb eines Flugzeugs, insbesondere eines Verkehrsflugzeugs, verursachen können.

Um Störungen eines Zapfluftversorgungssystems während eines Fluges erkennen zu können, lassen sich die von den Druck- und Temperatursensoren des Zapfluftversorgungssystems ermittelten Werte überwachen, wobei im Stand der Technik regelmäßig lediglich eine Prüfung gegenüber vorgegebenen Schwellwerten mit zum Teil langen Bestätigungszeiten erfolgt. Wird bei einem solchen System ein Schwellwert durch einen Messwert überschritten, wird das gesamte Zapfluftversorgungssystem vorsorglich deaktiviert. Diese Form der Überwachung ermöglicht weder eine Berücksichtigung des dynamischen Verhaltens der Komponenten noch eine aktive Beurteilung des Zustands des Zapfluftsystems.

Auch wenn diese Überwachung des Zapfluftversorgungssystems in der Lage ist, mögliche Störungen im Zapfluftversorgungssystem zu erkennen und das System bei Bedarf zu deaktivieren, liefern die aus dem Stand der Technik bekannten Überwachungseinrichtungen in den Störungsmeldungen keine detaillierten Informationen zur möglichen Ursache einer Störung des Zapfluftversorgungssystems, sodass eine Störung regelmäßig aufwendige Fehlersuche- und Behebungsmaßnahmen erfordert.

Das Deaktivieren von Zapfluftversorgungssystem bei Störungen hat darüber hinaus den Nachteil, dass bei Deaktivierung eines Systems das oder die weiteren Zapfluftversorgungssysteme des Flugzeugs zusätzlich die Zapfluft des deaktivierten Zapfluftversorgungssystems bereitstellen müssen, was den Verschleiß und auch das Ausfallrisiko der weiteren Zapfluftversorgungssysteme erhöht.

Aus dem Dokument US 9,555,903 B2 ist ein Verfahren zum Diagnostizieren von Störungen des Zapfluftversorgungssystems beschrieben, bei dem diverse am Zapfluftversorgungssystem angeordnete Sensoren ausgelesen und die jeweiligen Sensordaten auf Abweichungen von Vergleichswerten überprüft werden. Bei den Vergleichswerten kann es sich um fest vorgegebene Werte, aus Betriebsparametern des Triebwerks und des dazugehörigen Zapfluftversorgungssystems ermittelte Parameter, für das fragliche Zapfluftversorgungssystem in der Vergangenheit ermittelte (Durchschnitts-)Werte oder für sämtliche Zapfluftversorgungssysteme einer Baureihe in der Vergangenheit ermittelte Durchschnittswerte handeln.

Die Interpretation evtl. festgestellter Abweichungen kann dabei flugphasenspezifisch erfolgen, also bspw. separat für die Start-, Steigflug-, Sinkflug- und Reiseflugphase. Es können dann in Einzelfällen bestimmte Abweichungen der Sensorwerte von den Vergleichswerten in vorgegebenen Flugphasen ggf. spezifischen Störungen des Zapfluftversorgungssystems zugeordnet werden. Hingegen kann bspw. ein zu geringer Druck in der Steigflug- oder Reiseflugphase tatsächlich keiner Komponente oder zumindest einer kleinen Gruppe von Komponenten eindeutig zugeordnet werden. Zumindest bei einem Teil der Störungsmeldungen erfolgt auch bei dem Verfahren gemäß US 9,555,903 B2 keine tatsächliche Einschränkung der ggf. fehlerhaften Komponenten des Zapfluftversorgungssystems, womit die Fehlersuche in einem solchen Störungsfall sehr aufwendig ist.

US2014/309846 A1 offenbart ein weiteres System zur Überwachung eines Zapfluftversorgungssystems eines Flugzeugs mit zwei Analogsensoren.

Aufgabe der vorliegenden Erfindung ist es, ein Verfahren und ein Computerprogrammprodukt zur Überwachung eines Zapfluftversorgungssystems eines Flugzeugs zu schaffen, welches gegenüber dem Stand der Technik verbessert ist.

Gelöst wird diese Aufgabe durch ein Verfahren gemäß dem Hauptanspruch sowie ein Computerprogrammprodukt bzw. ein Satz von Computerprogrammprodukten gemäß dem Anspruch 9. Vorteilhafte Weiterbildungen sind Gegenstand der abhängigen Ansprüche.

Demnach betrifft die Erfindung ein Verfahren zur Überwachung eines Zapfluftversorgungssystems eines Flugzeuges mit
- wenigstens zwei Analogsensoren zur Zustandsüberwachung des Zapfluftversorgungssystems anhand der Sensordaten;
mit den Schritten:
- Ermitteln von wenigstens einer Kennfeld-Punktwolke aus den zeitgleich erfassten Sensordaten von jeweils zwei Analogsensoren zum Zustand des Zapfluftversorgungssystems über einen vorgegebenen Mindestzeitraum;
- Abgleich der Kennfeld-Punktwolke mit einer vorgegebenen Kennlinie für den von der Kennfeld-Punktwolke abgebildeten Zusammenhang der erfassten Sensordaten; und
- Bei Feststellung einer Abweichung der Kennfeld-Punktwolke von der vorgegebenen Kennlinie über ein vorgegebenes Maß hinaus: Ausgeben einer Warnung.

Weiterhin betrifft die Erfindung ein Computerprogrammprodukt oder einen Satz von Computerprogrammprodukten, umfassend Programmteile, welche, wenn geladen in einen Computer oder in untereinander vernetzte Computer, zur Überwachung eines Zapfluftversorgungssystems eines Flugzeuges mit wenigstens zwei Analogsensoren zur Zustandsüberwachung des Zapfluftversorgungssystems anhand der Sensordaten gemäß dem erfindungsgemäßen Verfahren ausgelegt sind.

Zunächst werden einige in Zusammenhang mit der Erfindung verwendete Begriffe erläutert.

Bei einem "Analogsensor" handelt es sich um einen Sensor, der einen physikalische Eigenschaften einer Komponente oder in seiner Umgebung als quantitative Messgröße erfassen kann. Die erfasste Messgröße wird als analoge oder - im Regelfall - digitale Sensordaten zur Verfügung gestellt. Typische Beispiele für Analogsensoren sind Drucksensoren, Temperatursensoren oder Absolutwertgeber. Gegenteil von "Analogsensor" ist ein "Binärsensor", der als Zustandssensor ausschließlich qualitativ das Vorliegen eines bestimmten definierten Zustandes bestätigten kann, bspw. ob ein Ventil geschlossen ist oder nicht. Entsprechende von einem Binärsensor feststellbare Zustandsinformationen ("binäre Sensordaten") können auch an den Sensordaten eines Analogsensors durch Abgleich der quantitativen Sensordaten mit einem Grenzwert abgeleitet werden, bspw. durch Vergleich der durch einen Absolutwertgeber erfasste Ventilstellung mit einem Grenzwert zur Feststellung, ob das Ventil geschlossen ist.

In einem "Kennfeld" können grundsätzlich Zusammenhänge Sensordaten zweier verschiedener Analogsensoren abgebildet werde. Dabei können von den beiden Analogsensoren zu einem gleichen Zeitpunkt ermittelte Messwerte als Punkte mit den Messwerten als Koordinaten abgebildet. Werden über die Zeit mehrerer entsprechender Punkt in einem Kennfeld abgebildet, ergibt sich eine "Kennfeld-Punktwolke".

Für Sensordaten zweier verschiedener Analogsensoren kann eine Soll-Relation in Form einer "Kennlinie" vorgegeben sein. Eine entsprechende Kennlinie gibt regelmäßig den im fehlerfreien Betrieb grundsätzlich zu erwartenden Zusammenhang der Sensordaten zweier Analogsensoren wieder. Die Kennlinie kann dabei aus einem theoretischen Modell des Zapfluftversorgungssystems oder aus historischen Daten einer oder mehrerer baugleicher Zapfluftversorgungssysteme gewonnen werden. Die Kennlinie kann durch - ggf. abschnittsweise - mathematische Funktionen oder durch einen über Koordinatenpaare vorgegebenen Polygonzug abgebildet werden.

Die Erfindung hat erkannt, sich die Fehlerdiagnose und Fehlerprognose bei einem Zapfluftversorgungssystem deutlich verbessern lassen, wenn anstelle der aus dem Stand der Technik bekannten zeitlichen Beobachtung einzelner Zustandswerte eines Zapfluftversorgungssystems, auf ein oder mehrere Kennfelder aus jeweils Sensordaten von jeweils zwei Analogsensoren, die den Zustand des Zapfluftversorgungssystems überwachen, zurückgegriffen wird. Dabei können je nach Wahl der Analogsensoren für ein bestimmtes Kennfeld unterschiedliche Komponenten und/oder unterschiedliche Funktionen der Komponenten des Zapfluftversorgungssystems überwacht werden. Insbesondere können dynamische Zustände des Zapfluftversorgungssystems, die bei Betrachtung von Messwerten in der Zeitreihe praktisch nicht auswertbar sind, über die Kennfelder einfach ausgewertet werden. Das ermöglicht eine genaue Überwachung insbesondere der dem Verschleiß besonders unterliegenden Ventile des Zapfluftversorgungssystems.

Die dazu verwendeten Analogsensoren können unmittelbar dem Zapfluftversorgungssystem zugeordnet sein. Es ist aber auch möglich, dass ein Analogsensor in einer dem Zapfluftversorgungssystem vor- oder nachgeschalteten Komponente des Flugzeugs angeordnet ist, bspw. dem Triebwerk. Wesentlich ist lediglich, dass der Analogsensor eine Messgröße erfasst, die unmittelbar Einfluss auf das Zapfluftversorgungssystem hat, bspw. der im Triebwerk herrschende Druck im Bereich einer Abzapfstelle des Zapfluftversorgungssystems.

Eine durch die Analogsensoren ermittelte Kennfeld-Punktwolke kann sich je nach Betriebszustand des Zapfluftluftventils oder des Flugzeugs, insbesondere dessen Triebwerk, stark variieren. So kann sich die Kennfeld-Punktwolke je nach Stellung unterschiedlicher Ventile des Zapfluftventils und/oder der Drehzahl des Triebwerks verändern. Um dennoch eine einfache Auswertung der Kennfelder, bspw. im Abgleich mit einer Kennlinie, zu ermöglichen, ist es bevorzugt, wenn betriebszustandsabhängige Kennfelder ermittelt werden, wobei der Betriebszustand des Zapfluftversorgungssystems durch eine Steuerungseinheit des Zapfluftversorgungssystems oder des Flugzeugs vorgegeben und/oder durch Zustandssensoren am Zapfluftversorgungssystem oder am Flugzeug ermittelt wird.

Falls das Zapfluftversorgungssystem wenigstens ein Druckregelventil umfasst, kann es bevorzugt sein, wenn dessen Aktivierungszustand unterschiedliche Betriebszustände kennzeichnet, für die unterschiedliche Kennfelder ermittelt werden. Bei dem Aktivierungszustand kann es sich insbesondere um eine binäre Angabe, bspw., ob ein bestimmtes Ventil gesperrt ist, handeln. Bei dem binären Sperrzustand handelt es sich um binäre Sensordaten.

Bei Zapfluftversorgungssystemen wird häufig an wenigstens zwei unterschiedlichen Druckstufen des Verdichters eines Triebwerks Luft abgezapft, wobei dann an wenigstens einer Abzapfstelle ein gesondertes Druckregelungsventil vorgesehen ist. Der binäre Sperrzustand dieses gesonderten Druckregelungsventils kann unterschiedliche Betriebszustände des Zapfluftversorgungssystems kennzeichnen.

Es ist weiterhin möglich, dass ein oder mehrere (auch betriebszustandsabhängige) Kennfelder parameterabhängig sind, also zusätzliche zu den beiden in Relation zu setzenden Sensordaten noch wenigstens ein weiterer Parameter bei der Kennwert-Punktwolke sowie der vorgegebenen Kennlinie berücksichtigt wird. Bei dem wenigstens einen zusätzlichen Parameter kann es sich vorzugsweise um einen durch einen Analogsensor zur Zustandsüberwachung des Zapfluftversorgungssystems oder der Umgebung oder einen nicht-binären Betriebszustandswert des Flugzeugs handeln.

Bei dem Parameter für parameterabhängige Kennfelder kann es sich bspw. um die durch einen dafür vorgesehenen Analogsensor erfasste Durchflussmenge durch das Zapfluftversorgungssystem und/oder die durch einen dafür vorgesehenen Analogsensor im Zapfluftversorgungssystem oder im Triebwerk erfasste Lufttemperatur handeln. Auch die durch die Steuerung vorgegebene Soll-Drehzahl des Triebwerks oder der gemessene oder aus anderen Größen abgeleitete Druck in vorgegebenen Bereichen innerhalb des Triebwerks oder in der Umgebung kann als Parameter herangezogen werden. Auch kann als Parameter der Zapfluftverbrauch und die damit verbundene Anforderung an das Zapfluftversorgungssystem berücksichtigt werden.

Vorzugsweise werden Kennfeld-Punktwolken über diskrete, sich nicht überschneidende Zeitabschnitte ermittelt, sodass sich anhand zweier oder mehrere Kennfeld-Punktwolken für unterschiedliche Zeitabschnitte eine Trendanalyse durchführen lässt. In einer entsprechenden Trendanalyse können sich Verschleißerscheinungen an Komponenten des Zapfluftversorgungssystems abbilden und eine ggf. verschlissene Komponente vorausschauend ausgetauscht werden, bevor es zu einem verschleißbedingten Ausfall der Komponente und ggf. des gesamten Zapfluftversorgungssystems kommt. Die Zeitabschnitte können entsprechend von dem Flugzeug durchgeführte tatsächliche Flüge gewählt werden, also vom Anlassen der Triebwerke vor dem Start bis zum Abschalten der Triebwerke nach der Landung. Es ist auch möglich, dass sich einen Zeitabschnitt über mehrere entsprechende Flüge erstreckt.

Mögliche festgestellte Abweichungen der Kennfeld-Punktwolke von der vorgegebenen Kennlinie können auch klassifiziert werden. Es hat sich nämlich gezeigt, dass unterschiedliche Veränderungen einer Kennfeld-Punktwolke, die zu Abweichungen von der dazugehörigen Kennlinie führen, auf unterschiedliche Verschleißerscheinungen und/oder Fehler ggf. einer jeweils bestimmten Komponente hinweisen. Indem die festgestellte Abweichung klassifiziert wird, kann häufig die tatsächliche Fehlerursache unmittelbar identifiziert werden.

Es ist bevorzugt, wenn das Zapfluftversorgungssystem wenigstens einen Analogdrucksensor umfasst, dessen Sensordaten erfasst und bei der Ermittlung der Kennfeld-Punktwolke berücksichtigt werden. Insbesondere können auch wenigstens zwei Analogdrucksensoren an unterschiedlichen Stellen des Zapfluftversorgungssystems vorgesehen sein, deren Sensordaten gemeinsam eine Kennfeld-Punktwolke bilden.

Das Verfahren kann in dem erfindungsgemäßen Computerprogrammprodukt oder Satz von Computerprogrammprodukten implementiert werden. Für die evtl. Klassifizierung festgestellter Abweichungen kann ein Expertensystem vorgesehen werden.

Die Erfindung wird nun anhand einer vorteilhaften Ausführungsform unter Bezugnahme auf die beigefügten Zeichnungen beispielhaft beschrieben. Es zeigen:
- Figur 1:: eine Detaildarstellung eines zur Durchführung des erfindungsgemäßen Verfahrens ausgebildeten Zapfluftsystems;
- Figur 2:: eine schematische Darstellung des Zapfluftsystems aus Figur 1;
- Figur 3a, b:: ein erstes Beispiel eines bei dem erfindungsgemäßen Verfahren überprüften Kennfeldes;
- Figur 4a, b:: ein zweites Beispiel eines bei dem erfindungsgemäßen Verfahren überprüften Kennfeldes;
- Figur 5:: beispielhafte Darstellungen von klassifizierbaren Abweichungen von einer ersten vorgegebenen Kennlinie; und
- Figur 6a, b:: beispielhafte Darstellungen von klassifizierbaren Abweichungen von einer zweiten vorgegebenen Kennlinie.

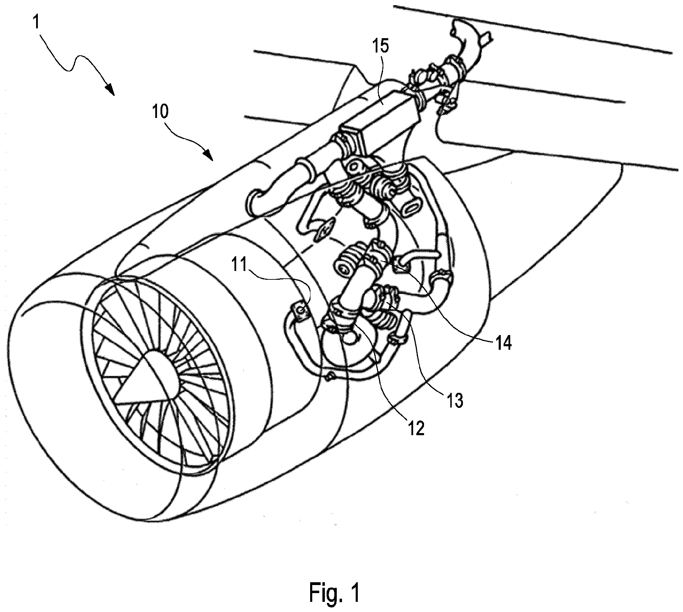

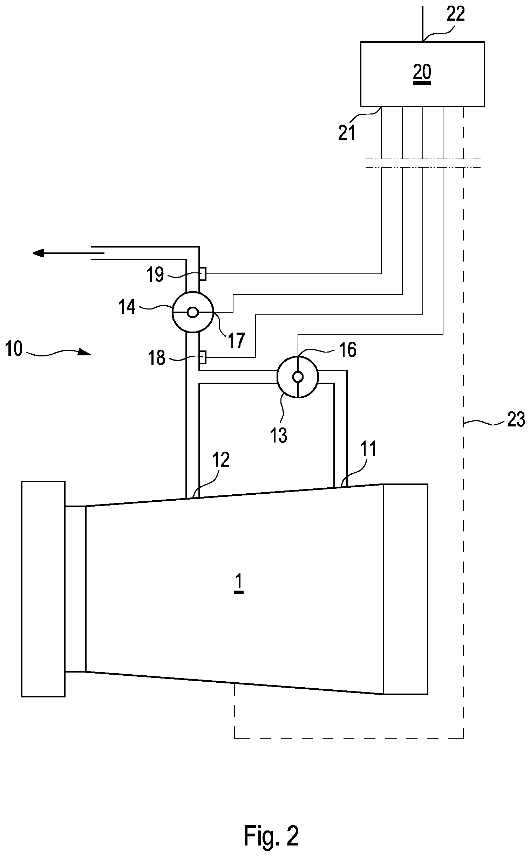

In Figuren 1 und 2 ist ein zur Durchführung des erfindungsgemäßen Verfahrens ausgebildetes Zapfluftversorgungssystem 10 am Triebwerk 1 eines Flugzeugs (nicht dargestellt) gezeigt, wobei Figur 1 das Zapfluftversorgungssystem 10 strukturell am Triebwerk 1 zeigt, während Figur 2 eine schematische Funktionsskizze des Zapfluftversorgungssystems 10 ausschließlich in dem für die Durchführung des erfindungsgemäßen Verfahrens relevanten Umfang zeigt.

Das Zapfluftversorgungssystem 10 verfügt über zwei Abzapfstellen 11, 12 im Bereich der Verdichterstufen des Triebwerks 1, wobei die eine Abzapfstelle 11 im Bereich des Ausgangs des Hochdruckverdichters des Triebwerks 1 angeordnet ist, während die andere Abzapfstelle 12 in einem Bereich des Triebwerks 1 mit geringerem Druck angeordnet ist.

Der Abzapfstelle 11 im Bereich des Ausgangs des Hochdruckverdichters des Triebwerks 1 ist ein erstes Steuerventil 13, das Hochdruckventil, zugeordnet, dessen Ausgang mit der Abzapfstelle 12 verbunden ist. Die Abzapfstelle 12 und der Ausgang des Hochdruckventils 14 sind an ein weiteres Steuerventil 15, dem Druckregelventil, angebunden. Von dort aus gelangt die Zapfluft ggf. durch einen Wärmetauscher 15 (vgl. Figur 1) zur Abkühlung der Zapfluft zu den Verbrauchern bzw. in ein Druckluftversorgungsnetz (nicht dargestellt).

Bei den Steuerungsventilen 13, 14 kann es sich um selbst regulierende Ventile oder um durch eine Steuerungseinheit (nicht dargestellt) über Steuerleitungen (nicht dargestellt) aktiv gesteuerte Ventile handeln. In beiden Fällen erfolgt die Zapfluftversorgung grundsätzlich in Abhängigkeit u. a. des Betriebszustandes des Triebwerks 1 sowie der Luftbedarf der direkt oder über ein Druckluftversorgungsnetz angebundenen Verbraucher.

Zur Überwachung des Zapfluftversorgungssystems 10 ist eine Überwachungseinheit 20 vorgesehen, die einen Computer umfasst, auf der ein erfindungsgemäßes Computerprogrammprodukt geladen ist. Die Überwachungseinheit 20 kann unmittelbar am Zapfluftversorgungssystem 10, davon entfernt an Bord des Flugzeuges oder außerhalb des Flugzeugs am Boden angeordnet sein. Im letzten Fall erfolgt die Übertragung der notwendigen Daten über eine Funkverbindung.

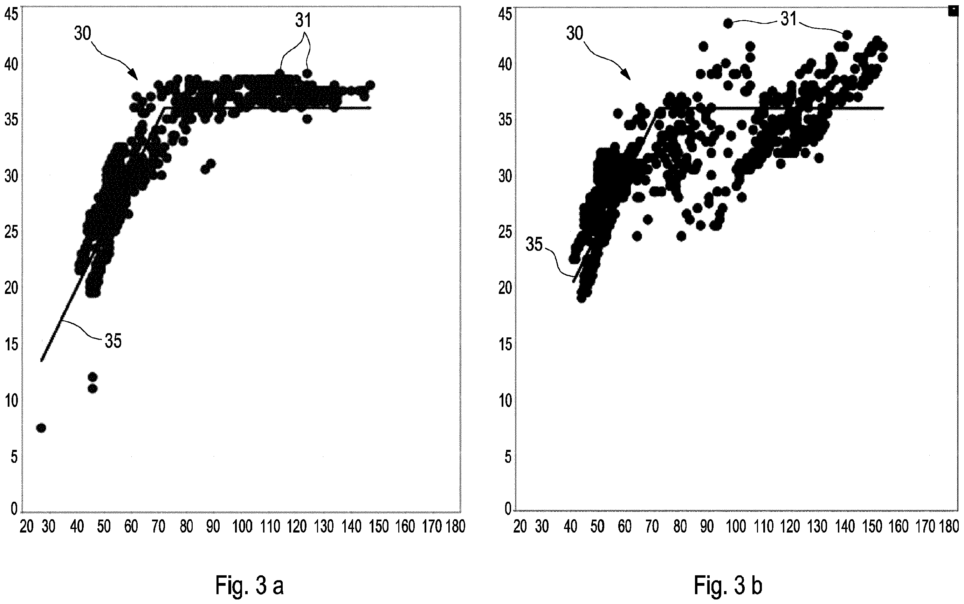

Die Überwachungseinheit 20 umfasst mehrere Eingänge 21 für analoge und binäre Sensordaten, sowie Betriebszustandsinformationen vom Triebwerk 1, sowie einen Ausgang 22 zur Ausgabe evtl. Warnungen. Die von der Überwachungseinheit 20 ggf. generierten Warnungen können bspw. im Cockpit des Flugzeuges zur Anzeige gebracht werden oder sie werden an einen Wartungsbetrieb weitergeleitet, der daraufhin die Wartung des Zapfluftsystems vorbereiten kann. Alternativ oder zusätzlich können über den Ausgang 22 grafische Kennfeld-Darstellungen, wie sie bspw. in Figuren 3 bis 6 gezeigt sind, zur weiteren Begutachtung durch einen Wartungstechniker ausgegeben werden.

Mit den Eingängen 21 sind die an den Ventilen 13, 14 Binärsensoren 16, 17 angeordnet, wobei der dem Hochdruckventil 13 zugeordnete Binärsensor 16 die Sperrstellung des Hochdruckventils 13 angibt, als logisch ja als Sensordaten ausgibt, wenn das Hochdruckventil 13 vollständig geschlossen ist. Die Sensordaten des Binärsensors 17 am Druckregelventil 14 sind logisch ja, wenn das Druckregelventil 14 vollständig geöffnet ist.

Darüber hinaus sind noch zwei Analogdrucksensoren 18, 19 an die Eingänge der Überwachungseinheit 20 angeschlossen. Mit dem Analogdrucksensor 18 wird der Druck in der Zuleitung vor dem Druckregelventil 14 aufgenommen, während der Analogdrucksensor 19 den geregelten Druck nach dem Druckregeventil 14 aufnimmt.

Die Überwachungseinheit 20 ist weiterhin über eine Datenleitung 23 mit einer Steuerungs- und/oder Überwachungseinheit (nicht dargestellt) des Triebwerks 1 und/oder des Flugzeugs verbunden und erhält von dort weitere Betriebsdaten und Betriebsparameter des Triebwerks 1 und/oder des Flugzeugs. Im dargestellten Beispiel wird der Überwachungseinheit 20 der relative Überdruck gegenüber der Umgebung innerhalb des Triebwerks im Bereich der Abzapfstelle 11, also hinter dem Hochdruckverdichter des Triebwerks 1, über die Datenleitung 23 als analoge Sensordaten zugeleitet. Darüber hinaus können der Überwachungseinheit 20 über die Datenleitung 23 noch die Temperaturen der Luft an verschiedenen Stellen des Triebwerks 1 zugeleitet werden, die bei der nachfolgend beschriebenen Kennfeld-Ermittlung als zusätzliche Parameter berücksichtigt werden können.

In Abhängigkeit der durch die Binärsensoren 16, 17 ablesbaren Betriebszustände des Zapfluftversorgungssystems 1 werden unterschiedliche Kennfelder verwendet.

Befindet sich das Triebwerk 1 im Leerlauf, sodass an der Abzapfstelle 12 keine Zapfluft mit ausreichendem Druck zur Verfügung steht, wird auf die Abzapfstelle 11 hinter dem Hochdruckverdichter des Triebwerks 1 zurückgegriffen, an der auch im Leerlauf des Triebwerks 1 ausreichender Druck für die Zapfluftversorgung herrscht. In diesem Fall wird bei dem dargestellten Ausführungsbeispiel das Druckregelventil 14 vollständig geöffnet und die Druckregelung erfolgt allein über geeignete Ansteuerung des Hochdruckventils 13.

In diesem Betriebszustand meldet der Binärsensor 16 also ein logisches Nein an die Überwachungseinheit 20 (das Hochdruckventil 13 ist ja zumindest nicht vollständig geschlossen), während der Binärsensor 17 ein logische Ja ausgibt, da das Druckregelventil 14 in diesem Betriebszustand vollständig geöffnet ist. Die Überwachungseinheit 20 kann anhand der Sensordaten der beiden Binärsensoren 16, 17 den für den Leerlauf des Triebwerks 1 vorgesehenen Betriebszustand des Zapfluftsystems 10 feststellen.

Für diesen Betriebszustand ist als Kennfeld vorgesehen, den Druck in der Zuleitung zum Druckregelventil 14 in Abhängigkeit des im Bereich der Abzapfstelle 11 in dem Triebwerk 1 herrschenden Überdrucks gegenüber der Umgebung abzubilden. Der Druck in der Zuleitung zum Druckregelventil 14 wird dabei vom Analogdrucksensor 18 erfasst, während der fragliche Druck im Innern des Triebwerks 1, der dem Druck nach dem Hochdruckverdichter entspricht, über die Datenleitung 23 als analoge Sensordaten zur Verfügung steht. Letztere Sensordaten werden von einem Analogsensor im Triebwerk 1 erfasst. Die einzelnen Messwerte sind dabei zeitcodiert, sodass sich jeweils Wertepaare 31 aus zum gleichen Zeitpunkt erfassten Messwerte aus den Sensordaten bilden lassen, womit sich dann eine Kennwert-Punktwolke 30 ergibt.

In Figur 3a ist exemplarisch eine entsprechende Kennwert-Punktwolke 30 aus einer Vielzahl von Wertepaaren 31 dargestellt. Dabei ist auf der x-Achse der Überdruck gegenüber der Umgebung an der Abzapfstelle 11, auf der y-Achse der durch den Analogdrucksensor 18 erfasste Druck dargestellt.

Für denselben Zusammenhang ist eine betriebszustandsabhängige Kennlinie 35 vorgesehen, welche die ideale Abhängigkeit der beiden betrachteten Werte abbildet.

Wie in Figur 3a zu sehen, ergibt sich - unter Berücksichtigung üblicher Messungenauigkeiten und Toleranzen - eine ausreichende Übereinstimmung der Kennwert-Punktwolke 30 mit der Kennlinie 35, sodass im dargestellten Beispiel keine Warnung ausgegeben werden muss. Die Überwachungseinheit 20 ist dabei dazu ausgebildet, eben diese Überprüfung durchzuführen, wobei in diesem Fall keine Warnung über den Ausgang 22 ausgegeben wird.

In Figur 3b ist eine zur Figur 3a identisch ermittelte und dargestellte Kennwert-Punktwolke 30 gezeigt, wobei aufgrund der erheblichen Streuung der Wertepaare 31 bei höheren Drücken an der Abzapfstelle 11 (x-Achse) eine erhebliche Abweichung von der Kennlinie 35 - auch durch die Überwachungseinheit 20 - festgestellt werden kann, sodass eine Warnung über den Ausgang 22 ausgegeben werden kann. Die in Figur 3b gezeigte Abweichung zeugt von einem fehlerhaften Verhalten des Ventils 16, sodass sich die Fehlersuche auf das Ventil 16 (bspw. mechanischer Verschleiß oder Leckagen) bzw. dessen Ansteuerung beschränken kann. Detailliertere Aussagen über die Fehlerursache allein auf Basis der ermittelten Abweichungen können ggf. durch entsprechenden Vergleich mit vorherigen ähnlichen Abweichungen und deren jeweilige Fehlerursache getroffen werden.

Beim eigentlichen Flug des Flugzeugs läuft das Triebwerk 1 nicht mehr im Leerlauf und auch das Zapfluftversorgungssystem 10 befindet sich ein einem anderen Betriebszustand. In diesem liegt an der Abzapfstelle 12 regelmäßig ausreichender Druck für die Zapfluftversorgung vor, sodass das Hochdruckventil 13 vollständig geschlossen ist und die Druckregelung ausschließlich über das Druckregelungsventil 14 erfolgt. Der Betriebszustand kann von der Überwachungseinheit 20 erneut allein über die Sensordaten der Binärsensoren 16, 17 festgestellt werden, da nämlich der Binärsensor 16 ein logisches Ja für ein vollständig geschlossenes Hochdruckventil 13 und der Binärsensor 17 ein logisches Nein für ein nicht vollständig geöffnetes Druckregelungsventil 14 ausgibt.

Für diesen Betriebszustand ist als Kennfeld vorgesehen, den Druck nach dem Druckregelventil 14 in Abhängigkeit des Drucks vor dem Druckregelventil 14 abzubilden. Der erstgenannte Druck wird dabei vom Analogdrucksensor 19 erfasst, während der Druck in der Zuleitung zum Druckregelventil 14 vom Analogdrucksensor 18 erfasst wird. Die einzelnen Messwerte werden jeweils zeitgleich erhoben, sodass sich jeweils Wertepaare 31 aus zum gleichen Zeitpunkt erfassten Messwerte aus den Sensordaten bilden lassen, womit sich dann eine Kennwert-Punktwolke 30 ergibt.

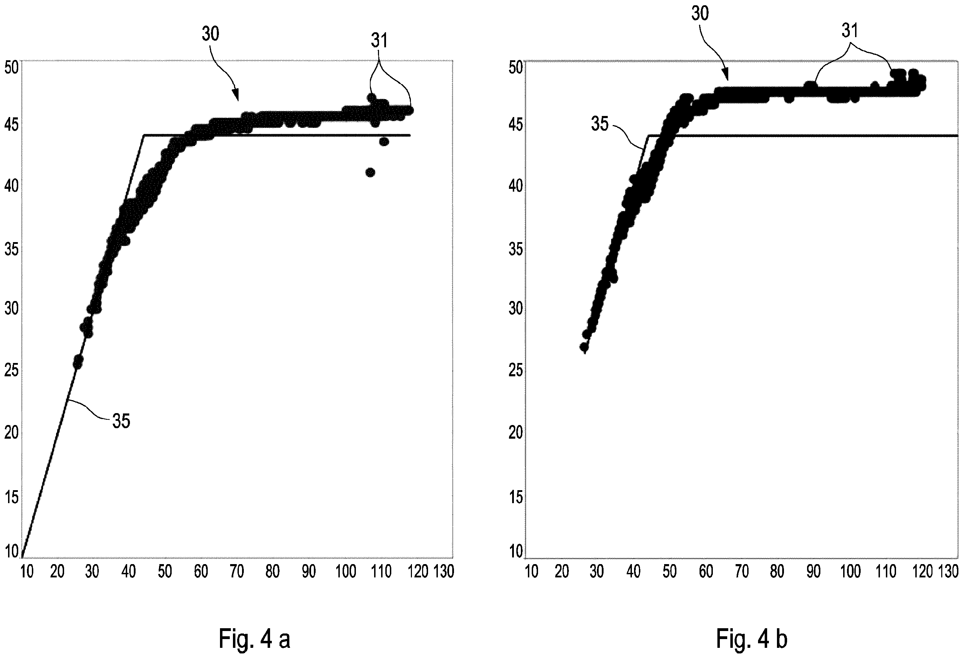

In Figur 4a ist exemplarisch eine entsprechende Kennwert-Punktwolke 30 aus einer Vielzahl von Wertepaaren 31 dargestellt. Dabei ist auf der x-Achse der durch den Analogdrucksensor 18 erfasste Druck vor dem Druckregelventil 14, auf der y-Achse der durch den Analogdrucksensor 18 erfasste Druck nach dem Druckregelventil 14 dargestellt.

Auch ist eine entsprechende, vorgegebene Kennlinie 35 für die Soll-Abhängigkeit der beiden Werte in Figur 4a dargestellt.

Die Abweichungen der Kennwert-Punktwolke 30 von der Kennlinie 35 in Figur 4a liegt noch im zulässigen und von der Überwachungseinheit mit bekannten mathematischen Methoden überprüfenbaren Toleranzbereich, sodass im dargestellten Beispiel keine Warnung ausgegeben werden muss bzw. wird.

In Figur 4b ist eine zur Figur 4a identisch ermittelte und dargestellte Kennwert-Punktwolke 30 gezeigt. In diesem Beispiel ist die Kennwert-Punktwolke 30 im Vergleich zu Figur 4a jedoch deutlich "nach oben" verschoben, wodurch dich eine deutliche Abweichung zur Kennlinie 35 ergibt. Diese Abweichung wird von der Überwachungseinheit 20 als über ein vorgegebenes Toleranzmaß hinaus erkannt und folglich eine Warnung über den Ausgang 22 ausgegeben. Die in Figur 4b gezeigte Abweichung zeugt von einem fehlerhaften Verhalten des Ventils 14, sodass sich die Fehlersuche auf das Ventil 14 (bspw. mechanischer Verschleiß oder Leckagen) bzw. dessen Ansteuerung beschränken kann. Detailliertere Aussagen über die Fehlerursache allein auf Basis der ermittelten Abweichungen können ggf. durch entsprechenden Vergleich mit vorherigen ähnlichen Abweichungen und deren jeweilige Fehlerursache getroffen werden.

Aus bestimmten Abweichungen einer Kennwert-Punktwolke 30 von der dazugehörigen Kennlinie 35 lassen sich unmittelbar Rückschlüsse auf die Art des Defektes herleiten. Die festgestellten Abweichungen werden dazu - bspw. auch unmittelbar von der Überwachungseinheit 20 - klassifiziert, wobei bei einer ausreichend eindeutigen Klassifizierung durch die Überwachungseinheit 20 von dieser ein entsprechender Hinweis über den Ausgang 22 ausgegeben werden kann.

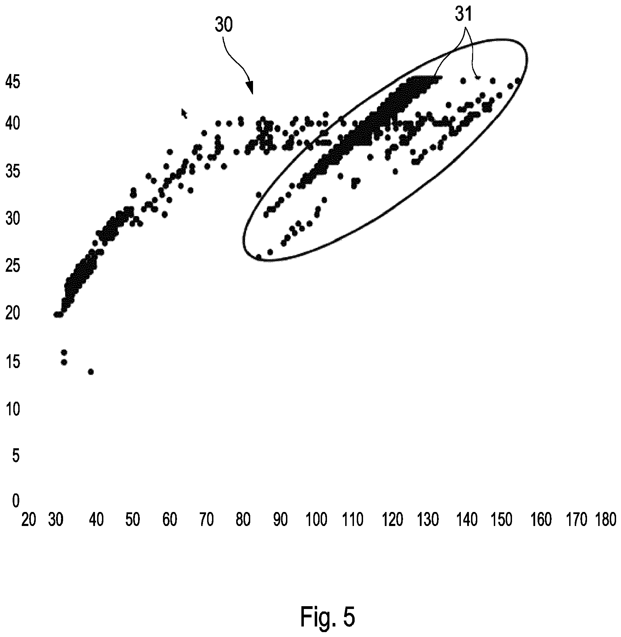

In Figur 5 ist eine Kennwert-Punktwolke 30 gemäß Figuren 3a, b gezeigt, bei der das eingekreisten Muster von Wertepaaren 31 den Rückschluss zulässt, dass der Binärsensor 16 defekt ist bzw. fehlerhafte Sensordaten liefert. Würde der Binärsensor 16 nämlich bei tatsächlich geschlossenem Hochdruckventil 13 korrekt ein logisches Ja ausgeben, würden die fraglichen Wertepaare 31, welche die Druckregelung durch das Druckregelventil 15 widerspiegeln, nämlich nicht in diesem Kennfeld, wie es in Figur 5 dargestellt ist, erfasst werden (vgl. Ausführungen zum Betriebszustand zur Figur 3a).

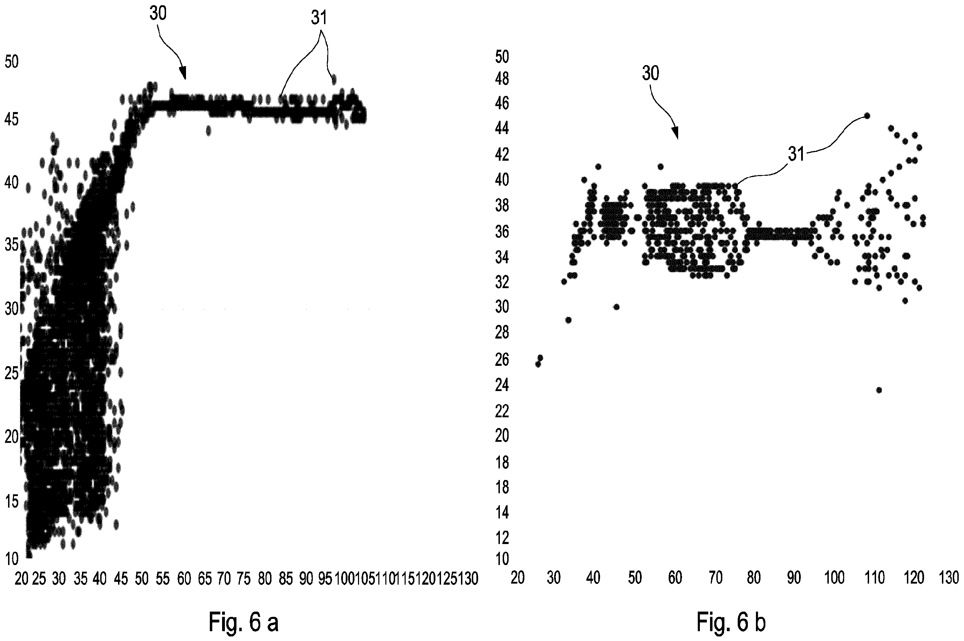

In Figur 6a, b sind weitere Beispiele von klassifizierbaren Abweichungen von der Kennlinie 35 bei Kennwert-Punktwolken 30 gemäß Figur 4a, b gezeigt.

Die in Figur 6a gezeigte Kennwert-Punktwolke 30 deutet darauf hin, dass die Ansteuerung des Druckregelungsventils 14 nicht ordnungsgemäß arbeitet. Die Kennwert-Punktwolke 30 aus Figur 6b weist auf ein verschlissenes Druckregelventil 13 hin.

## Patentansprüche

1. Verfahren zur Überwachung eines Zapfluftversorgungssystems (10) eines Flugzeuges mit
- wenigstens zwei Analogsensoren (18, 19) zur Zustandsüberwachung des Zapfluftversorgungssystems (10) anhand der Sensordaten;
mit den Schritten:
- Ermitteln von wenigstens einer Kennfeld-Punktwolke (30) aus den zeitgleich erfassten Sensordaten von jeweils zwei Analogsensoren (18, 19) zum Zustand des Zapfluftversorgungssystems (10) über einen vorgegebenen Mindestzeitraum;
- Abgleich der Kennfeld-Punktwolke (30) mit dafür einer entsprechenden vorgegebenen Kennlinie (35) für den von der Kennfeld-Punktwolke (30) abgebildeten Zusammenhang der erfassten Sensordaten; und
- Bei Feststellung einer Abweichung der Kennfeld-Punktwolke (30) von der vorgegebenen Kennlinie (35) über ein vorgegebenes Maß hinaus: Ausgeben einer Warnung.

2. Verfahren nach Anspruch 1,
**dadurch gekennzeichnet, dass**
betriebszustandsabhängige Kennfelder ermittelt werden, wobei der Betriebszustand des Zapfluftversorgungssystems (10) durch eine Steuerungseinheit des Zapfluftversorgungssystems (10) oder des Flugzeugs vorgegeben und/oder durch Zustandssensoren (16, 17) am Zapfluftversorgungssystem (10) oder am Flugzeug ermittelt wird.

3. Verfahren nach dem vorhergehenden Anspruch,
**dadurch gekennzeichnet, dass**
das Zapfluftversorgungssystem (10) wenigstens ein Druckregelventil (14) umfasst, dessen Aktivierungszustand, vorzugsweise dessen binärer Sperrzustand, unterschiedliche Betriebszustände kennzeichnet.

4. Verfahren nach einem der vorhergehenden Ansprüche,
**dadurch gekennzeichnet, dass**
parameterabhängige Kennfelder ermittelt werden, wobei der Parameter vorzugsweise ein durch einen Analogsensor zur Zustandsüberwachung des Zapfluftversorgungssystems (10) oder der Umgebung oder einen nicht-binären Betriebszustandswert des Flugzeugs abbildet.

5. Verfahren nach dem vorhergehenden Anspruch,
**dadurch gekennzeichnet, dass**
Parameter für parameterabhängige Kennfelder die durch einen dafür vorgesehenen Analogsensor erfasste Durchflussmenge durch das Zapfluftversorgungssystem (10) und/oder die durch einen dafür vorgesehenen Analogsensor im Zapfluftversorgungssystem (10) oder im Triebwerk (1) erfasste Lufttemperatur sind.

6. Verfahren nach einem der vorhergehenden Ansprüche,
**dadurch gekennzeichnet, dass**
wenigstens zwei Kennfeld-Punktwolken (30) über diskrete, sich nicht überschneidende Zeitabschnitte ermittelt werden und eine Trendanalyse anhand entsprechend erfasster Kennfeld-Punktwolken (30) für unterschiedliche Zeitabschnitte durchgeführt wird.

7. Verfahren nach einem der vorhergehenden Ansprüche,
**dadurch gekennzeichnet, dass**
festgestellte Abweichungen der Kennfeld-Punktwolke (30) von der vorgegebenen Kennlinie (35) klassifiziert werden.

8. Verfahren nach einem der vorhergehenden Ansprüche,
**dadurch gekennzeichnet, dass**
das Zapfluftversorgungssystem (10) wenigstens einen Analogdrucksensor (18, 19) umfasst, dessen Sensordaten erfasst und bei der Ermittlung der Kennfeld-Punktwolke (30) berücksichtigt werden.

9. Computerprogrammprodukt oder Satz von Computerprogrammprodukten, umfassend Programmteile, welche, wenn geladen in einen Computer oder in untereinander vernetzte Computer, zur Überwachung eines Zapfluftversorgungssystems (10) eines Flugzeuges mit wenigstens zwei Analogsensoren (18, 19) zur Zustandsüberwachung des Zapfluftversorgungssystems (10) anhand der Sensordaten gemäß dem Verfahren nach einem der vorhergehenden Ansprüche ausgelegt sind.

## Claims

1. A method for monitoring a bleed air supply system (10) of an aircraft, having
- at least two analog sensors (18, 19) for monitoring the state of the bleed air supply system (10) based on the sensor data;
having the steps of:
- determining at least one characteristic map point cloud (30) from the simultaneously acquired sensor data from two respective analog sensors (18, 19) relating to the state of the bleed air supply system (10) over a predefined minimum period of time;
- comparing the characteristic map point cloud (30) with a corresponding predefined characteristic curve (35) for the relationship between the acquired sensor data that is represented by the characteristic map point cloud (30); and
- if a deviation of the characteristic map point cloud (30) from the predefined characteristic curve (35) beyond a predefined amount is detected: outputting a warning.

2. The method as claimed in claim 1,
**characterized in that**
operating-state-dependent characteristic maps are determined, wherein the operating state of the bleed air supply system (10) is predefined by a control unit of the bleed air supply system (10) or the aircraft and/or is determined by state sensors (16, 17) on the bleed air supply system (10) or on the aircraft.

3. The method as claimed in the preceding claim,
**characterized in that**
the bleed air supply system (10) comprises at least one pressure control valve (14), the activation state of which, preferably the binary blocking state of which, characterizes different operating states.

4. The method as claimed in one of the preceding claims,
**characterized in that**
parameter-dependent characteristic maps are determined, wherein the parameter preferably represents a by an analog sensor for monitoring the state of the bleed air supply system (10) or the environment or a non-binary operating state value of the aircraft.

5. The method as claimed in the preceding claim,
**characterized in that**
parameters for parameter-dependent characteristic maps are the flow rate through the bleed air supply system (10), as recorded by an analog sensor provided for this purpose, and/or the air temperature recorded by an analog sensor provided for this purpose in the bleed air supply system (10) or in the engine (1).

6. The method as claimed in one of the preceding claims,
**characterized in that**
at least two characteristic map point clouds (30) are determined over discrete, non-overlapping time periods and a trend analysis is carried out using appropriately recorded characteristic map point clouds (30) for different time periods.

7. The method as claimed in one of the preceding claims,
**characterized in that**
detected deviations of the characteristic map point cloud (30) from the predefined characteristic curve (35) are classified.

8. The method as claimed in one of the preceding claims,
**characterized in that**
the bleed air supply system (10) comprises at least one analog pressure sensor (18, 19) whose sensor data are acquired and taken into account when determining the characteristic map point cloud (30).

9. A computer program product or set of computer program products comprising program parts which, when loaded into a computer or into computers networked to each other, are designed to monitor a bleed air supply system (10) of an aircraft, having at least two analog sensors (18, 19) for monitoring the state of the bleed air supply system (10) based on the sensor data, according to the method as claimed in one of the preceding claims.

## Revendications

1. Procédé de surveillance d'un système d'alimentation en air prélevé (10) d'un aéronef comprenant
- au moins deux capteurs analogiques (18, 19) destinés à surveiller l'état du système d'alimentation en air prélevé (10) sur la base des données de capteur ;
ledit procédé comprenant les étapes suivantes :
- déterminer au moins un nuage de points de diagramme caractéristique (30) à partir des données de capteur acquises simultanément par deux capteurs analogiques (18, 19) sur l'état du système d'alimentation en air prélevé (10) sur un intervalle de temps minimum spécifiée ;
- comparer le nuage de points de diagramme caractéristique (30) à une courbe caractéristique spécifiée correspondante (35) pour la connexion des données de capteur enregistrées représentées par le nuage de points de diagramme caractéristique (30) ; et
- si un écart du nuage de points de diagramme caractéristique (30) par rapport à la courbe caractéristique spécifiée (35) est détecté au-delà d'un niveau spécifié : délivrer un avertissement.

2. Procédé selon la revendication 1,
**caractérisé en ce que**
des diagrammes caractéristiques dépendant de l'état de fonctionnement sont déterminés, l'état de fonctionnement du système d'alimentation en air prélevé (10) étant indiqué par une unité de commande du système d'alimentation en air prélevé (10) ou de l'aéronef et/ou étant déterminé par des capteurs d'état (16, 17) situé sur le système d'alimentation en air prélevé (10) ou sur l'aéronef.

3. Procédé selon la revendication précédente,
**caractérisé en ce que**
le système d'alimentation en air prélevé (10) comprend au moins une soupape de régulation de pression (14) dont l'état d'activation, de préférence dont l'état de blocage binaire, caractérise différents états de fonctionnement.

4. Procédé selon l'une des revendications précédentes,
**caractérisé en ce que**
des diagrammes caractéristiques dépendant de paramètres sont déterminés, le paramètre représentant de préférence un capteur analogique destiné à surveiller l'état du système d'alimentation en air prélevé (10) ou de l'environnement ou une valeur d'état de fonctionnement non binaire de l'aéronef.

5. Procédé selon la revendication précédente,
**caractérisé en ce que**
des paramètres destinés à des diagrammes caractéristiques dépendant de paramètres sont le débit, détecté par un capteur analogique dédié, à travers le système d'alimentation en air prélevé (10) et/ou la température de l'air, détectée par un capteur analogique dédié, dans le système d'alimentation en air prélevé (10) ou dans la turbine (1).

6. Procédé selon l'une des revendications précédentes,
**caractérisé en ce que**
au moins deux nuages de points de diagramme caractéristique (30) sont déterminés sur des intervalles de temps discrets ne se chevauchant pas et une analyse de tendance est réalisée à l'aide de nuages de points de diagramme caractéristique (30) acquis de manière appropriée pour différents intervalles de temps.

7. Procédé selon l'une des revendications précédentes,
**caractérisé en ce que**
des écarts détectés du nuage de points de diagramme caractéristique (30) par rapport à la courbe caractéristique spécifiée (35) sont classés.

8. Procédé selon l'une des revendications précédentes,
**caractérisé en ce que**
le système d'alimentation en air prélevé (10) comprend au moins un capteur de pression analogique (18, 19) dont les données de capteur sont acquises et prises en compte lors de la détermination du nuage de points de diagramme caractéristique (30).

9. Produit de programme informatique ou ensemble de produits de programme informatique comprenant des parties de programme qui, lorsqu'elles sont chargées dans un ordinateur ou dans des ordinateurs en réseau les uns avec les autres, sont conçues pour surveiller un système d'alimentation en air prélevé (10) d'un aéronef comprenant au moins deux capteurs analogiques (18, 19) destinés à surveiller l'état du système d'alimentation en air prélevé (10) sur la base des données de capteur conformément au procédé selon l'une des revendications précédentes.
